# EUROPEAN PATENT APPLICATION

(11) **EP 2 395 699 A1**
(43) Date of publication of application: **14.12.2011**
(21) Application number: 10305624.8
(22) Date of filing: 11.06.2010
(51) Int. Cl.: H04L 12/18, H04M 3/56, H04L 29/06

(54) **A method, a system, a server, terminal, a computer program and a computer program product for holding conferences in a communications network**

(71) Applicant: Alcatel Lucent, 75007 Paris (FR)
(72) Inventor: Biffi, Sebastien, 67400 IIkirch-Graffenstaden (FR); Tranquant, Nicolas, 92400 Courbevoie (FR)
(74) Representative: Brose, Gerhard

(57) **Abstract**

A method, a system, a server, terminal, a computer program and a computer program product for holding conferences in a communications network.

The invention concerns a method for holding conferences in a communications network, **wherein** a server hosting a conference receives a piece of information regarding a participant of said conference, determines a mode of holding said conference depending on said piece of information and communicates said mode to a terminal.

## Description

### Field of the invention

The invention relates to a method, a system, a server, a terminal, a computer program and a computer program product for holding conferences in a communications network.

### Background

In implementations capable of holding conferences in a communications network, mostly participants of an international conference agree on a common language at the beginning of the conference. In case of an audio conference, for example the commonly spoken language is selected by the participants via a short discussion. In case of collaboration conferences, additionally to selecting the spoken language, the written language has to be discussed as well. Depending on the amount of participants, having non-common spoken or written languages as their mother-language, the discussion may be lengthy and time consuming.

### Summary

The object of the invention is thus to automatically select a common spoken or written language that suits best all participant's language abilities.

The main idea of the invention is that a server hosting a conference receives a piece of information regarding a participant of said conference, determines a mode of holding said conference depending on said piece of information and communicates said mode to a terminal. This way, no valuable time is lost by lengthy discussions of participants about said mode.

Advantageously said mode is a meeting status or an agenda and said piece of information is an attribute of said participant. This way a meeting status or an agenda may be automatically determined and announced in real-time.

Advantageously said server receives a first message comprising said piece of information from a first terminal, determines said mode and communicates said mode in a second message to said first terminal or a second terminal. This way, no valuable time is lost by lengthy discussions of participants of said conference about the most suitable common language.

Advantageously, said piece of information is a language preference received from said first terminal in said first message, said mode is a common language, in particular a language that is preferred by participants of said conference and wherein said mode is transferred to said first terminal or a second terminal in a second message. This way, the language preferences of users of said terminal can be included in the decision processes.

Advantageously said first terminal or a second terminal receives said second message comprising said mode of holding said conference, announces said mode, and wherein said mode is determined depending on said piece of information regarding said participant of said conference. This way, the participant using said first terminal or said second terminal is informed about the language that is most suitable tor the conference he/she is participating in.

Advantageously said first terminal sends said first message to said server hosting said conference, wherein said first message comprises said piece of information regarding said participant of said conference. This way said participant can send information to said server in order to influence said mode,

Further developments of the invention can be gathered from dependent claims and the following description.

### Brief description of the figures

In the following, the invention will be explained further, making reference to the attached drawings.
Fig. 1 schematically shows part of a communications network.
Fig. 2 shows a first flowchart of a first method for holding conferences in a communications network.
Fig. 3 shows a second flowchart of a second method for joining a conference.

### Description of the embodiments

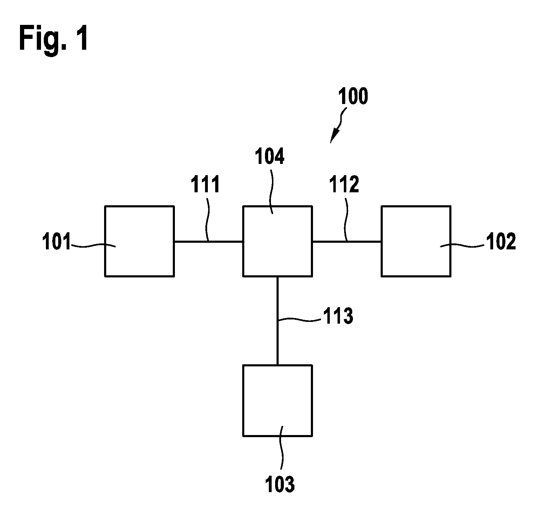

Fig. 1 shows part of a communications network 100, adapted for example to conduct a telephone conference call with three participants. Each of the participants in this example connects to the conference call individually.

Said communications network 100 for example comprises a first terminal 101, a second terminal 102, a third terminal 103 and a Server 104.

Conducting said telephone conference call means to hold a conference in said communications network 100 by means of connecting said terminals 101, 102, 103 and said server 104, e.g. electronically at the same time via said communications network 100 for example in order to transmit voice signals between each of the terminals 101, 102 and 103.

When holding said conference for example each of said three participants uses one of said terminals 101, 102 and 103. Additionally, when holding said telephone conference call, said server 104 hosts said conference. This means for example that said server 104 executes a computer program that is adapted to connect each of said terminals 101, 102 and 103 for example in order to transmit said voice signals between each ot the terminals 101, 102 and 103.

Alternatively video signals or other data signals may be exchanged between said terminals 101, 102 and 103 instead of voice signals.

Furthermore, said communications network 100 comprises a data links 111, 112 and 113 for connecting said terminals 101, 102 and 103 and said server 104.

Said data links 111, 112 and 113 are used for communication in said communications network. Communicate means that information is transmitted, e.g. electronically in messages, via said links 111, 112 and 113.

For example, said data links 111, 112 and 113 are internet connections connecting said terminals 101, 102 and 103 to said server 104 using the Session Initiation Protocol (well known as SIP) / Real Time Transport Protocol (well known as RTF). Alternatively any other type of connection, e.g. a Transmission Control Protocol / Internet Protocol (well known as TCP/IP) may be used instead.

Said terminals 101, 102 and 103 are for example voice over Internet Protocol phones, well-known as VoIP-phones, adapted to connect to said server 104 via said data links.

In order to hold a conference in said communications network 100, said server 104 is adapted to connect with said terminal 101, 102 or 103, to host said conference, to receive a piece of information regarding a participant of said conference from said terminal 101, 102 or 103, to determine a mode of holding said conference depending on said piece of information, and to communicate said mode to said terminal 101, 102 or 103.

Communicating said mode means that for example an electronic message comprising information about said mode, e.g. a string, is sent to said terminal 101, 102 or 103 via the respective link 111, 112, 113.

Furthermore said terminal 101, 102 or 103 is adapted to send said piece of information regarding said participant, to receive said mode and to announce said mode.

Said server 104 is adapted to determine said mode in real-time, for example to determine said mode upon receipt of a request from said terminal 101, 102 or 103 to connect to or disconnect from said conference.

Furthermore said server 104 is adapted to communicate said mode to said terminal in real-time, e.g. immediately upon completion of the determination of said mode.

The method for determining said mode of holding said conference may depend on the type of said piece of information regarding said participant.

Goal of a first embodiment of invention is to automatically determine a common language that is preferred by participants of said conference in real-time, as participants join or leave said conference. To this end said piece of information regarding said participant is a language preference, in particular sent from said terminal 101, 102 or 103 to said server 104 in a first message.

According to said first embodiment of the invention said first terminal 101 for conducting said telephone conference call is adapted to send information about said language preference, i.e. a language that is preferred by participants that use said first terminal 101, to said server 104.

Furthermore, said first terminal 101 is adapted co receive information about said common language from said server 104 and announce said information about said common language.

Said first terminal 101 is furthermore adapted to determine said information about said language that is preferred by said participants that use said first terminal 101 from a user input or a storage.

To that end, said first terminal 101 comprises for example a graphical user interface or a non volatile storage.

Methods for prompting a user for input on a graphical user interface or methods for reading said information about said language that is preferred from said non volatile storage are well known to a person skilled in the art and not further explained here.

For example said graphical user interface comprises a touch screen to enable a user participating in said conference using said first terminal 101 to input a first string identifying said information about said language preference.

Said first string is for example the Name of said language that is accepted by said first terminal 101, e.g. "French". In case multiple languages are acceptable, said first string may comprise of a comma separated list, e.g. "French, English".

Furthermore, said first terminal 101 is adapted to determine and send said first message comprising said information about said language preference to said server 104. Said first message for example comprises said comma separated list, e.g. "French, English".

Said first message may also comprise a request to join said conference. Alternatively, said request to join said conference may be sent in a separate message from said first terminal 101 to said server 104.

Furthermore, said first terminal 101 is for example adapted to announce said common language upon receipt of said common language. Said common language is for example received by said first terminal 101 in a second message sent by said server 104.

Said common language is for example announced by said first phone 101 via said graphical user interface. Said common language may be announce via any other way of user interface, e.g. via voice output.

For example said second message comprises a second string identifying said common language, e.g. the name of said common language. Said common language is announced by displaying the content of said second string, e.g. "French". Alternatively said second string is played as a voice output.

Methods for determining said first message and said second message as well as for sending or receiving said first message or said second message, e.g. via said first data link 111 are well known to persons skilled in the art and not explained further here. For example, said messages are determined and sent according to the well-known Transmission Control Protocol / Internet Protocol.

Said second terminal 102 or said third terminal 103 may be adapted to provide the same features as said first terminal 101 regarding the input or sending of the respective language preference.

Additionally or alternatively said second terminal 102 or said third terminal 103 may be adapted to provide the same features as said first terminal 101 regarding the receiving or announcing of said common language.

Alternatively said second terminal 102 or said third terminal 103 may provide not all or none of the abovementioned features.

In the latter case said server 104 may be adapted to provide other means of entering the language preference or to announce said common language.

For example voice prompts and voice announcements from the server may be used for all terminals that do not support all of the features described above for said first terminal 101 instead.

Said server 104 is for example a conferencing host adapted to run an application that allows terminals to connect to each other via said server 104 and conduct a telephone conference call. Such applications like the Alcatel-Lucent My Teamwork communications solution are well known to the person skilled in the art, and not further explained here.

Furthermore said server 104 is adapted to determine said common language, in particular a language that is preferred by participants of said conference, upon receipt of a request from a terminal to join said conference. For example said server is adapted to receive said first message from said first terminal 101 and to determine said common language upon receipt of said first message depending on said information about said language preference.

Furthermore, said server 104 may be adapted to set a default language at the beginning of each conference that is hosted on server 104. To that end, said server 104 may comprise a hard disk for storing said default language.

Additionally, said server 104 may comprise a user interface, for example a web server interface, allowing for a change of said default language by an administrator.

Furthermore, said server 104 is adapted to send information about said common language to said terminal. For example said server 104 is adapted to send said second message to said first terminal 101.

Optionally, said server 104 may be adapted to play voice prompts or voice announcements to and collect voice or multi-frequency signaling input from terminals that do not support sending said first message or receiving said second message.

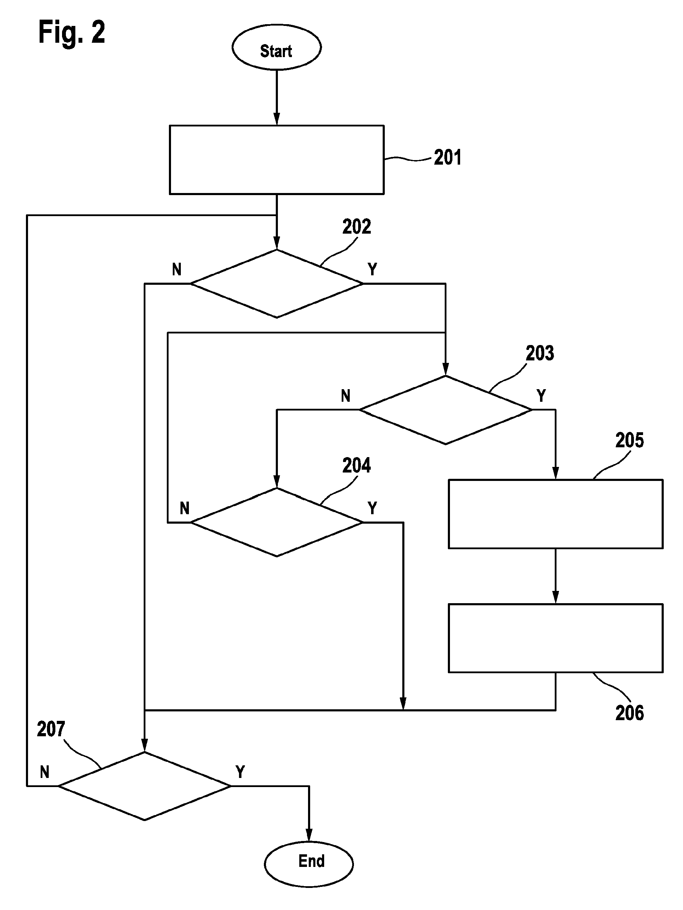

A first method for holding conferences is described below, making reference to the first flowchart of Fig. 2.

In the example said telephone conference call is initiated by said second terminal 102, e.g. by setting up a Conference Bridge on said server 104. Such request is for example sent by said second phone 102 via Session Initiation Protocol messages.

Said first method starts for example after said conference Bridge was set up on said server 104.

Alternatively, the request to start a conference on said server 104 may be sent by dialing a certain phone number on said second terminal 102.

After the start, a step 201 is executed.

In said step 201, said common language is set to said default language, for example said second string is set to "French". Afterwards, a step 202 is executed.

In said step 202, a test is performed to check whether a request to join said conference has been received. In case a request to join said conference has been received, e.g. from said first terminal 102, a step 203 is executed. Otherwise, a step 207 is executed.

In said step 203, a test is performed to check whether information about said language preference has been received, e.g. from said first terminal 101. In case information about said language preference, has been received, a step 205 is executed. Otherwise, a step 204 is executed.

In said step 204, a timeout condition is monitored. In case said timeout condition is met, said step 207 is executed, otherwise said step 203 is executed.

In said step 205, said common language is determined depending on said information about said language preference. For example, said first string is said comma separated list "French, English", indicating that the languages French and English are preferred. In this case, the new common language is for example determined by setting the second string to the name of the language that is contained in both, the first string and the second string. This means that the common language is set to the language preferred by participants of the conference.

In the example, the previously set common language, i.e. the content of said second string, is French and the language preference received in said first string from said first terminal 101 are French and English. Therefore in the example, the common language is determined to be the common content of the first and the second string, i.e. "French". This means that in the example the second string comprises the name "French". Afterwards, a step 206 is executed.

In said step 206, said information about said common language is sent to said first terminal 101 in said second message. For example said second string is sent in said second message to said first terminal 101. Afterwards, step 207 is executed.

In said step 207, a conference end trigger is monitored. In case a conference end trigger, for example a hang-up signal is received from said second terminal 102, said first method ends. Otherwise, said step 202 is executed to await new requests of terminals to join said conference.

For example the steps of said first method are repeated starting with step 202 when a request from the third terminal 103 is received.

Optionally, in case for example said third terminal 103 doesn't provide the feature to send said first message or receive said second message, said voice prompts, said voice input or said multi-frequency signaling may be used instead.

In this case in an additional step that is executed between said step 205 and said step 206, the language that is accepted by said third terminal 103 is requested via a voice prompt that is sent by said server 104 to said third terminal 103 and played by said third terminal 103. Additionally the response of a user of said third terminal 103, e.g. a voice reply, is sent to said server 104 using said third data link 113.

Furthermore in this case, in an additional step that is executed between said step 206 and step 207, said common language is announced via voice output sent by said server 104 to said third terminal 103.

In case no common language is found, the common language may be maintained unchanged or the default language is used as common language.

Optionally said server 104 may build a list of common languages based on the language preferences received from terminals.

Additionally or alternatively, to comparing said default common language to the information about language preferences received from said terminals 101, 102 and 103 requesting to join the conference, said server 104 may be adapted to store any language that is preferred by any of said terminals 101, 102 and 103 and determine common language from the language preference stored.

Additionally, said server 104 may be adapted to base the selection of said common language on priorities assigned to said language preferences. In this case said first message comprises for example of an additional array, assigning each language preference listed in said first string a weight, e.g. Zero - not accepted, 1 = basic knowledge, 2 = fluent and 3 = mother language.

Furthermore in this case said server 104 may be adapted to determine said weight from said array and determine said common language depending on the weight. For example for each language preference the weight is added up and the language with the highest added up weight is selected. This way, each participant of said conference may provide multiple language preferences and weigh then according to his or her language abilities.

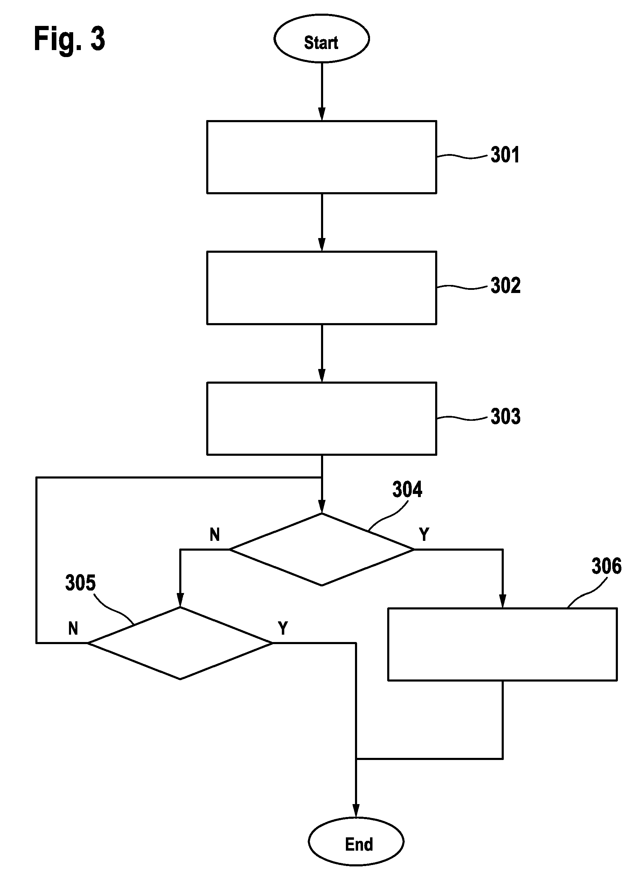

A second method for joining said telephone conference call is now described, making reference to a second flowchart depicted in Fig. 3.

Said second method for example starts when said first terminal 101 determines that a connection to said telephone conference call is requested, e.g. by said user. Such request may be entered by said user via said graphical user interface with touch screen.

After the start, a step 301 is executed.

In said step 301, said language preference is determined for example from said storage or said graphical user interface. For example said first string is read from said storage or as input from said graphical user interface. Afterwards, a step 302 is executed.

In said step 302, said first terminal 101 sends a request to join said telephone conference call to said server 104. For example said first terminal 101 sends a Session Initiation Protocol request to said server 104. Afterwards, a step 303 is executed.

In said step 303, said first terminal 101 sends said information about said language preference, for example as said first string, in said first message to said server 104. Afterwards, a step 304 is executed.

In said 304, a test in performed to check whether said information about said common language, e.g. said second message comprising said second string, has been received. In case said information about said common language has been received, a step 306 is executed. Otherwise a step 305 is executed.

In said step 305, a timeout condition is monitored. In case said timeout condition is met, said method ends by connecting said first terminal 101 to said telephone conference call on said server 104 without announcing said common language. Otherwise, said step 304 is executed.

In said step 306, said first terminal 101 determines said common language from said information about said common language, e.g. said second string, received in said second message and announces it, for example by displaying said second string on said graphical user interface.

Afterwards, said second method ends by connecting said first terminal 101 to said telephone conference call on said server 104.

Alternatively to using said graphical user interface, a voice-prompt may be used instead. Input from the user regarding the languages accepted may be determined from voice input as well.

Additionally to determining said common language each time one of said terminals 101, 102 or 103 requests to join said telephone conference call, said common language may be determined again upon the request of any of said terminals 101, 102 or 103 to leave said conference, e.g. received as a hang-up signal. In this case, said common language may for example be announced to all other terminals that remain in said conference.

In a preferred modification of said first embodiment, instead of only announcing said common language only to said newly joining terminal, said information about said common language may be sent to all terminals each time said common language changes or each time a new terminal joins or leaves said telephone conference call.

Additionally in case of incompatibility of languages, said sever 104 may be adapted to alert all terminals 101, 102 and 103 or some of the terminals 101, 102 or 103 about the incompatibility, e.g. via a service message or a voice announcement.

Additionally in case of incompatibility of languages, said server 104 may use a translation system for translating language to allow all participants a full comprehension of the conference.

Goal of a second embodiment of the invention is to automatically determine and announce a meeting status as participants join or leave said conference.

To this end said piece of information regarding said participant is for example a number of individuals connecting to said conference using said terminal 101, 102 or 103.

Said terminal 101, 102 or 103 is adapted to accept said number of individuals as input from said graphical user interface with or without touch screen and send it as said first string in said first message.

Said server 104 is in this case adapted to count the number of individuals, i.e. add all the number of individuals received in all of said first strings from any of said terminals 101, 102 and 103. Additionally said server 104 is adapted to determine said meeting status, e.g. a percentage of participating individuals with respect to a total of invited participating individuals. To this end, said default value stored on said server 104 is the number of invited participants. Furthermore the second string is determined to reflect said meeting status, for example the string "election is possible" in case said percentage of participating individuals exceeds a predetermined first threshold of for example 75%, or "election is not possible" otherwise.

All other steps of said first method, additional steps and alternatives to said first method may be applied in said second embodiment as well. In particular, said voice prompts and voice announcements may be used.

Goal of a third embodiment of the invention is to automatically determine and announce an agenda, i.e. topics to be discussed during said conference as participants join or leave said conference.

To announce topics of an agenda that can be discussed, depending on the expertise of the participants an agenda item are stored on said server 104, e.g. in a data-base, together with information about the expertise of participants needed in order to discuss said agenda item.

Furthermore said server 104 is adapted to determine in real-time who actually participates in said conference.

Additionally said terminal 101, 102 or 103 is adapted to prompt to input a participants name, function or a secret identification to identify him- or herself against said server 104.

Alternatively for example information about the area of expertise may be requested from each participant upon connecting to said conference by a voice prompt and collected via a voice reply.

In case a secret identification is use, said server 104 may comprise of a data-base containing secret identification keys for validating said participant depending on said first message sent from said terminal 101, 102 or 103. For example said first message is a message encrypted according to the Advanced Encryption Standard (well known as AES) containing a secret user identification of a participant using said terminal 101, 102 or 103.

Optionally said server 104 may be adapted to determine information about the participants of said conference and may for example announce additional information useful to said participants. Said information may for example an area of responsibility of participants.

Alternatively or additionally two different terminals may be used by said participant, one, e.g. said first terminal 101, adapted to send said piece of information, regarding said participant and another, e.g. said second terminal 102, adapted to conduct said conference.

In this case said first terminal 101 adapted to send said piece of information is for example a web server with a web interface allowing said participant to submit said piece of information. Said web server may allow said participant to store said information at one point in time and reuse said preference. To that end said web server may comprise a data base and communication means to transmit said information. Alternatively said piece of information may be stored in an static administrative configuration that is configured by an administrator, or may be discovered dynamically, e.g. using language recognition by said web server. The invention applies to this case likewise.

Additionally or alternatively said participant may use simultaneously more than one terminal to join said conference. For example said participant may use said first terminal 101 for application sharing on a graphical interface and said second terminal 102 for audio or video, e.g. voice receiving/sending on a phone or video on a videophone. The invention applies to these cases likewise.

In case when one participant uses more than one terminal, for example said first terminal 101 is adapted and used to send said first message to said server 104. Furthermore said server 104 is adapted to receive said first message from said first terminal 101 and send said second message to another terminal, e.g. said second terminal 102 that is in use by the same participant. In this example said second terminal 102 is adapted to receive said second message and announce is to said participant. Said server 104 is in this case adapted to determine which terminals are used by the same participants, e.g. using said secret user identification of each participant, that is used to connect to said conference.

Alternatively or additionally said server 104 may create several conferences for one group of participants, e.g. one conference for each type of media. Types of conferences are for example voice conference, application sharing conference, instant messaging room. The invention applies likewise to the case where said information about said participant is determined in one conference and used on one or several other conferences.

In this case each of said conferences may be hosted on individual servers and said piece of information regarding said participant is exchanged between said individual servers via messages. Furthermore each of said individual servers in this case may be adapted to determine said second message and send it to said terminals 101, 102, 103.

The methods described above may be implemented as a computer program for holding conferences that, when executed on a computer, causes the computer to perform all the steps of said methods.

The methods described above may be implemented as function in each audio, chat, collaboration or video conference server.

The description and drawings merely illustrate the principles of the invention, it will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the figures, including any functional blocks labeled as 'processors', may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term 'processor' or 'controller' should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts and the like represent various processes which may be substantially represented in computer readable medium and so executed by a computer or processor, whether or not such computer or processor is explicitly shown.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

## Claims

1. A method for holding conferences in a communications network, **wherein** a server hosting a conference receives a piece of information regarding a participant of said conference, determines a mode of holding said conference depending on said piece of information and communicates said mode to a terminal.

2. The method according to claim 1, wherein said mode is a meeting status or an agenda and said piece of information is an attribute of said participant.

3. A method according to claim 1, wherein said server receives a first message comprising said piece of information from a first terminal, determines said mode and communicates said mode in a second message to said first terminal or a second terminal.

4. The method according to claim 1, wherein said piece of information is a language preference received from a first terminal in a first message, said mode is a common language, in particular a language that is preferred by participants of said conference and wherein said mode is transferred to said first terminal or a second terminal in a second message.

5. A method for holding conferences in a communications network, **wherein** a first terminal or a second terminal receives a second message comprising a mode of holding a conference, announces said mode, and wherein said mode is determined depending on a piece of information regarding a participant of said conference.

6. The method according to claim 5, wherein said first terminal sends a first message to said server hosting said conference, wherein said first message comprises said piece of information regarding said participant of said conference.

7. The method according to claim 5, wherein a common language, a meeting status or an agenda is received and announced as said mode.

8. A conferencing system for holding conferences in a communications network, **wherein** a server is adapted to host a conference, receive a piece of information regarding a participant of said conference, determine a mode of holding said conference depending on said piece of information and communicate said mode to a first terminal, wherein said first terminal or a second terminal is adapted to send said piece of information, receive said mode and announce said mode.

9. The conferencing system according to claim 8, wherein said first terminal is adapted to determine and send information about a language preference to said server, and wherein said common language is determined by said server depending on said information about said language preference.

10. A server for hosting a conference, **adapted to** host a conference, receive a piece of information regarding a participant of said conference, determine a mode of holding said conference depending on said piece of information and communicate said mode to a terminal.

11. The server according to claim 10, adapted to receive information about a language preference from a first terminal and to determine said common language depending on said information about said language preference.

12. The server according to claim 10, adapted to said piece of information from a first terminal and to communicate said mode to said first terminal or a second terminal.

13. A terminal for attending a conference, **adapted to** send said piece of information, receive a mode of holding said conference from said server and announce said mode.

14. The terminal according to claim 13, adapted to send information about a language preference to a server, receive information about a common language from said server and announce said information about said common language.

15. The terminal according to claim 13, adapted to determine said information about said language that is preferred from a user input or a storage.

16. A computer program for holding conferences, **wherein** said computer program, when executed on a computer, causes the computer to host a conference, receive a piece of information regarding a participant of said conference, determine a mode of holding said conference depending on said piece of information and communicate said mode.

17. A computer program product for holding conferences in a communications network comprising a computer usable medium having a computer readable program, **wherein** said computer readable program, when executed on a computer, causes the computer to host a conference, receive a piece of information regarding a participant of said conference, determine a mode of holding said conference depending on said piece of information and communicate said mode.
